# NEUE EUROPÄISCHE PATENTSCHRIFT

(11) **EP 2 805 823 B2**
(45) Veröffentlichungstag und Bekanntmachung des Hinweises auf die Entscheidung über den Einspruch: **07.06.2023**
(45) Hinweis auf die Patenterteilung: 14.10.2015
(21) Anmeldenummer: 14168867.1
(22) Anmeldetag: 19.05.2014
(51) Int. Cl.: B32B 1/08, B32B 7/02, B32B 27/32, F16L 11/04, F16L 11/12, F16L 9/12

(54) **Mindestens zweischichtiges Kunststoffrohr**
Plastic pipe with at least two layers
Tuyau en plastique au moins bicouche

(30) Priorität: 22.05.2013 DE 102013105202
(43) Veröffentlichungstag der Anmeldung: 26.11.2014
(73) Patentinhaber: egeplast international GmbH, 48268 Greven (DE)
(72) Erfinder: Eilers, Werner, 48356 Nordwalde (DE); Stranz, Dr. Michael, 49086 Osnabrück (DE)
(74) Vertreter: Duda, Rafael Thomas

(56) Entgegenhaltungen:
- EP-A1- 1 524 108
- WO-A1-01/94112
- DE-A1- 10 012 239
- DE-T2- 60 025 551
- DE-T2- 60 132 003
- DE-T2- 60 315 450
- JP-A- 2006 266 332
- Wettlinger Kunststoffe, "Technische Kunststoffe",S. 1-12
- Kunststoff-Taschenbuch, 29: Ausgabe (2004), S. 398-409

## Beschreibung

Die vorliegende Erfindung betrifft ein Kunststoffrohr umfassend ein Innenrohr aus Polyethylen sowie einen äußeren Schutzmantel aus einem von dem Material des Innenrohrs verschiedenen Polyethylen.

In den vergangenen Jahren gab es eine Vielzahl an Vorschlägen, Kunststoffrohre mit einer haftenden Außenhülle (Schutzmantel) zu versehen, die zum Ermöglichen einer Verbindung z.B. mittels Schweißen der Rohre beim Rohrleitungsbau mindestens an den Rohrenden entfernt werden kann.

In der PAS 1075 wird die Einordnung solcher Kunststoffmehrschichtrohre für den Transport von Trinkwasser, Gas und Abwasser in die Gruppe der Rohre mit additiven Schutzschichten (zusätzlich zu dem medienführenden und auf den Betriebsdruck dimensionierten Innenrohr aufgebrachtes äußeres Schutzrohr=Schutzmantel), den sogenannten Schutzmantelrohren vorgeschlagen. Dabei ist der ureigene Zweck des Schutzmantels, bzw. der Außenhülle, das darunterliegende Innenrohr bei der Freilagerung vor Oxidation der Außenfläche durch Witterungseinflüsse wie UV-Strahlung zu schützen und beim Transport sowie dem Rohrleitungsbau mögliche Beschädigungen des Innenrohres zu vermeiden, um zum einen eine Schwächung der mechanischen Eigenschaften zu verhindern und zum anderen eine schmutz-, kratzer- und riefenfreie Oberfläche des Innenrohres für das normgerechte Verschweißen beim Verbinden der Rohre zu gewährleisten.

Neben der Schutzwirkung des Schutzmantels gibt es noch eine weitere, wichtige Anforderung, die zu oben beschriebenen Rohrkonstruktionen geführt hat: Insbesondere die Schutzmantelrohre, die in der Versorgung, Entsorgung und Industrie für den Transport von Gas, Trink- und Prozess- und Abwässern eingesetzt werden sind derart ausgeführt, dass ein Innenrohr aus Polyethylen von einem farbigen Mantel aus Polypropylen konzentrisch umhüllt ist. Dieser Rohraufbau liegt darin begründet, dass das Schutzmantelmaterial Polypropylen - auf Grund seiner vergleichsweise höheren Härte als das für das Innenohr verendete Polyethylen - einen besseren Schutz gegen Abrieb bieten soll und beide Materialien inkompatibel sind, d.h. sich nicht stoffschlüssig miteinander verschweißen lassen. So soll ein wirksamer Schutz des Innenrohres vor Abrasion und Verkratzen erreicht werden und es wird zusätzlich möglich, dass der Schutzmantel von der Oberfläche des Innenrohres entfernt bzw. abgezogen werden kann, damit eine stoffschlüssige Verbindung zweier Schutzmantelrohrabschnitte mittels Schweißen der Polyethylen-Innenrohre beim Leitungsbau erfolgen kann. Im Rohrleitungsbau kommen hierzu in der Regel zwei Schweißverfahren, das Heizwendelschweißen und das Heizelementstumpfschweißen, zum Einsatz.

Beim Heizwendelschweißen werden Kunststoffrohre oder Kunststoffrohr und Formstück in aller Regel mit Hilfe von handelsüblichen Elektroschweißfittings, wie z.B. einer Elektroschweißmuffe, längskraftschlüssig und stoffschlüssig fest miteinander verbunden. Hierfür sind die Elektroschweißfittings mit integrierten Widerstandsdrähten (Heizwendel) ausgerüstet, wodurch beim Schweißvorgang die Innenseite der Muffe und die Außenseite des Rohres auf Schweißtemperatur erwärmt werden. Durch die Erwärmung wird von beiden Bauteilen Schmelze aufgebracht. Nach deren Abkühlung kommt es zu einer unlösbaren, homogenen Verbindung. Da die Muffen aus demselben Grundwerkstoff Polyethylen bestehen, also wie die Innenrohre der Schutzmantelrohre, und der Muffen-Innendurchmesser auf den genormten Außendurchmesser der Innenrohre ausgelegt ist, muss der Schutzmantel aus Polypropylen rückstandsfrei entfernt werden können.

Beim Heizelementstumpfschweißen müssen nicht nur die Rohroberflächen im Bereich der Schweißung sondern insbesondere auch die Stirnseiten der jeweiligen Rohrenden frei von Verunreinigungen sein, da die Stirnseiten die Fügeflächen darstellen. Die Reinigung muss unmittelbar vor dem Schweißen erfolgen. Vor dem Schweißvorgang werden die Stirnseiten der Rohre zusätzlich spanend bearbeitet, was besonders wichtig ist, so dass gratfreie und in etwa plan-parallele Fügeflächen entstehen. Anschließend werden mittels eines Heizelementes die Fügeflächen auf Schweißtemperatur gebracht, das Material in der Fügezone plastifiziert und die Rohrenden werden - nach Entfernen des Heizelements - unter Druck stirnseitig zusammengefügt.

Die oben genannten Schweißvorbereitungsarbeiten sind zum Teil sehr aufwendig und kostenintensiv. Ein bedeutender wirtschaftlicher Vorteil bei der Verschweißung der Schutzmantelrohre würde sich ergeben, wenn das Entfernen des Schutzmantels als Bearbeitungsschritt entfallen könnte und die Rohre direkt miteinander stoffschlüssig verschweißt werden könnten und die resultierende Schweißung den Qualitäts-Anforderungen der gängigen Regelwerke (DVS) standhält.

Für das Heizelementstumpfschweißen wird in der DE 10 2006 013 008 B4 ein Verfahren beschrieben, mit dem es möglich sein soll eine Stumpfschweißverbindung von Schutzmantelrohren ohne vorheriges entfernen des Schutzmantels herzustellen. Die dazu verwendete Rohrkonstruktion stellt ein Polyethylen-Schutzmantelrohr mit Polypropylen-Außenmantel dar.

Bei der Verlegung von Schutzmantelrohren mit einem Polypropylen(PP)-Schutzmantel sind in der Vergangenheit Fälle bekannt geworden, in denen der Schutzmantel unter Biegebelastungen abplatzt, wobei dies insbesondere bei niedrigen Verlegetemperaturen gehäuft auftritt. Dementsprechend ist der Anwendungsbereich dieser Rohrkonstruktionen beschränkt. Das für den Schutzmantel verwendete Polypropylen hat zwar eine vorteilhaft höhere Härte, versprödet aber auch (anders als der Innenrohrwerkstoff Polyethylen) bei tiefen Temperaturen nahe 0°C. Dies erfordert bei der Verlegung der Rohre besondere Einschränkungen im Vergleich zu Rohren ohne Schutzmantel wie z.B.: Verlegung nur unter größeren Biegeradien oder Verlegung nur bei Temperaturen oberhalb von beispielsweise 3°C möglich. Diese Eigenschaften schränken den Gebrauch der Schutzmantelrohre im Inland wie Ausland (Skandinavien etc.) deutlich ein.

Neben der höheren Härte ist Polypropylen auch deutlich biegesteifer (der E-Modul ist ca. 60% höher als der von Polyethylen) wodurch das Abwickeln von Ringbunden und die maximal zulässigen Biegeradien bei der Verlegung im Vergleich zu Polyethylen-Rohren ohne Schutzmantel (bei Rohren mit PP-Schutzmänteln liegt der minimal zulässige Biegeradius gemäß Verlegeanleitung 50% über dem von Polyethylenrohren ohne Schutzmantel) generell eingeschränkt werden müssen. Ein wirtschaftlich bedeutender Nachteil ergibt sich durch die Verwendung unterschiedlicher Polyolefinwerkstoffe innerhalb der Rohrkonstruktion hinsichtlich des Recyclings. Wird fehlerhaft produzierte Ware (falsche Signierung, nicht normkonforme Maße etc.) durch die Qualitätssicherung festgestellt, müssen die Polypropylen-Schutzmäntel der gesamten Charge manuell entfernt werden bevor das Polyethylen des Innenrohres über eine Mühle und sich anschließende Regranulierung dem Werkstoffrecyling-Prozess wieder zugeführt werden kann. Gleiches gilt für Anfahrausschuss, Rückläufer und aus anderen Gründen reklamierte Ware.

Wie zuvor erwähnt entspricht die Werkstoffauswahl Polypropylenmantel und Polyethyleninnenrohr dem genannten Stand der Technik wobei beide Materialien inkompatibel sind, d.h. in der Schmelze nicht mischbar, so dass bei Fügetechniken mittels Schweißen besondere Vorsichtsmaßnahmen zu treffen sind. Es darf keinesfalls passieren, dass beim Schweißen der Schutzmantelrohre kleinste Mengen Polypropylen mit in die Schweißnaht bzw. Fügezone gelangen. Andernfalls ist mit einem vorzeitigen Versagen der Schweißung zu rechnen.

Im Falle der Heizwendelformteile ist es offensichtlich, dass eine Rohrkonstruktion mit einem Schutzmantel aus einem anderen Material als das des Innenrohres ein direktes Aufschweißen der Formteile auf den Mantel unmöglich macht, da die Formteile (an Normen gebunden) aus dem gleichen Material wie das Innenrohr bestehen.

In der Vergangenheit ist wiederholt der Fall aufgetreten, dass bei grabenlosen Verlegeverfahren wie beispielsweise beim Spülbohren zu hohe Zugkräfte beim Einzug der Rohre auftraten. In diesen Fällen kann es zu einer ungewollten Überdehnung der Rohre kommen, was bei Schutzmantelrohren mit Polypropylenmantel zunächst ein einreißen des Schutzmantels hervorruft. Wird das Rohr nach dem Einreißen des Schutzmantels weiter eingezogen, kommt es oft zum Aufschieben des Mantels, so dass sich ein Wulst bildet und das einzuziehende Rohr sich in der Trasse festsetzt und nicht mehr bewegt werden kann. Eine Ursache hierfür liegt darin begründet, dass der sogenannte Zugkopf (Ein dickwandiges Polyethylen-Stück mit Zugöse) an ein Ende des Polyethyleninnenrohres mittels Heizelementstumpfschweißen angeschweißt wird, so dass die Aufnahme von auftretenden Schubspannungen, welche durch Reibung verursacht beim Einzug auftreten, allein durch eine hinreichende Haftung des auf dem Innenrohr aufliegenden Polypropylenmantels erfolgen kann. Diese Gefahr besteht also insbesondere dann, wenn eine geringe Haftung zwischen Kernrohr und Schutzmantel vorliegt und die auftretende Zugkraft nur in die Querschnittsfläche des Innenrohres eingeleitet werden kann. Hinzu kommt, dass die für die bekannten Rohrkonstruktionen verwendeten Materialien (Polypropylen und Polyethylen) ein unterschiedliches Dehnungsverhalten bei Zugbelastung aufweisen.

Tritt der zuvor beschriebene Schadensfall nur teilweise ein, d.h. eine Überdehnung des Rohres wird auf Grund von - im Einzugsprotokoll vermerkten - unzulässigen Zuglasten vermutet, ist es schwierig den Nachweis der Überdehnung und das Ausmaß des Schadens auf einfache Weise festzustellen. In der Praxis müsste der eingezogene Rohrstrang komplett abgemantelt werden und der Außendurchmesser des Innenrohres kontrolliert werden. Eine gemessene Verringerung des Außendurchmessers könnte dann als Nachweis einer Überdehnung und plastischen (bleibenden, nicht reversiblen) Verformung des Rohres gelten. Eine sehr zeitintensive und kostspielige Methode, so dass oftmals das Rohr vorsorglich ausgetauscht wird. Es gibt derzeit keinen im Rohr integrierten Indikator für eine geringfügige Überdehnung des Schutzmantelrohres.

In der EP 0 869 304 B1 ist ein Rohr aus thermoplastischem Kunststoff beschrieben, welches aus wenigstens zwei Schichten von Thermoplasten unterschiedlicher Eigenschaften besteht, wobei das die tragende Rohrschicht bildende Innenrohr aus einem Polyethylen hoher Dichte (PEHD) und die Deckschicht aus einem vernetzten Polyethylen (VPE oder PE-X) besteht. Vernetzte Polyethylene werden beispielsweise durch Bestrahlung von Polyethylen hergestellt, wodurch die langen Polymerketten aufgespalten werden und freie Radikale an den Ethylenmolekülen entstehen, die in einer sauerstofffreien Umgebung zu einer Vernetzung der Ketten untereinander führen. Vernetzte Polyethylene haben in der Regel ungünstigere Materialeigenschaften hinsichtlich Zug- und Bruchfestigkeit. Sie sind spröder als nicht vernetzte Polyethylene und verhalten sich nach dem Erwärmen wie Duromere. Dies führt dazu, dass sich Rohre mit Schichten aus vernetzten Polyethylenen nicht recyceln lassen, denn der Kunststoff dieser Schichten zeigt nach dem Aufschmelzen kein thermoplastisches Verhalten mehr. Zudem ist das Schweißen von Rohren mit Schichten aus PE-X problematisch.

In der DE 602 08 436 T2 werden Polymerrohre für heiße Fluide beschrieben, welche eine hohe Flexibilität aufweisen sollen und welche ein multimodales Polyethylen, bevorzugt ein bimodales Polyethylen, mit einem Anteil mit hohem Molekulargewicht und einem Anteil mit geringem Molekulargewicht umfasst. Bevorzugt handelt es sich um physikalische Mischungen aus PE-Typen mit unterschiedlichen mittleren Molekulargewichten, wobei der Anteil des PE-Typs mit niedrigem Molekulargewicht bei zwischen einem Drittel und etwa der Hälfte liegt. Die in dieser Schrift in einer Tabelle angegebenen MFR-Werte (melt flow rate), die ein Maß für die Viskosität des PE angeben, verdeutlichen, dass hier Polyethylene mit niedrigen und mittleren Molekulargewichten verarbeitet wurden. Weiterhin sind die aus dieser Schrift bekannten Rohre einschichtig.

Die EP 1 046 849 B1 beschreibt zweischichtige Rohre, deren Schichten jeweils aus Polyethylen hoher Dichte (PEHD) bestehen können, wobei die Außenschicht einen höheren FNCT-Wert haben soll, um eine hohe Haltbarkeit und Verschleißfestigkeit aufzuweisen. Für das Material der Außenschicht des Rohres wird mit Hexen copolymerisiertes PEHD mit bimodaler Molekulargewichtsverteilung verwendet. Wie zuvor erwähnt handelt es sich auch hier um eine physikalische Mischung aus PE-Typen mit unterschiedlichen mittleren Molekulargewichten. Es findet sich in dieser Schrift keine nähere Angabe zur Größe der Molekulargewichte der verschiedenen Anteile, die in dem verwendeten bimodalen Polymeren enthalten sind.

In der US 2010/0084037 A1 werden Verfahren und Zusammensetzungen für die Beschichtung von flexiblen Rohren beschrieben, bei denen eine oder mehrere Schichten auf ein Basisrohr aufgebracht werden. Es handelt sich hier um flexible schlauchartige Rohre mit vergleichsweise geringen Durchmessern. Das Basisrohr kann aus verschiedensten Polyethylentypen bestehen, wobei sämtliche gängige bekannte Polyethylene, nämlich HDPE, LDPE, MDPE und UHMWPE (Polyethylen mit ultrahohem Molekulargewicht), PE 100 und PE 80 ohne weitere Differenzierung nebeneinander genannt werden. Für die Beschichtung werden durch Bestrahlung härtbare crossvernetzte Acrylate wie beispielsweise Carboxyethylacrylat oder aliphatische Urethandiacrylatoligomere verwendet. In den in dieser Schrift angegebenen konkreten Ausführungsbeispielen werden Polyethylene mit ultrahohem Molekulargewicht nicht erwähnt.

Die WO 2008/084140 A1 beschreibt Mehrschichtrohre, die eine besonders verschleißfeste Innenschicht aufweisen, damit sie für den Transport von Aufschlämmungen aus dem Bergbau dienen können, welche in einer Flüssigkeit suspendierte abrasive Partikel enthalten. Es wird dazu u.a. vorgeschlagen, die Innenschicht mit einer erhöhten Härte zu auszubilden. Neben thermoplastischen Elastomeren werden hierzu auch Polyethylene mit hohem Molekulargewicht für die Innenschicht vorgeschlagen. Neben zweischichtigen Rohren werden in dieser Schrift auch drei- oder mehrschichtige Rohre mit zusätzlichen elektrisch leitenden Alarmschichten oder äußeren geschäumten Schichten beschrieben. Im Falle eines zweischichtigen Rohrs hat hier das Polyethylen der Innenschicht ein höheres Molekulargewicht als dasjenige der Außenschicht.

In der DE 20 2007 008 880 U1 werden Rohre mit den Merkmalen der eingangs genannten Gattung beschrieben. Diese Schrift beschreibt Wärmeübertragungsrohre zur Übertragung von Wärme zwischen einem durch das Wärmeübertragungsrohr fließenden Medium, welches in der Regel heißes Wasser ist, und einem das Wärmeübertragungsrohr umgebenden Medium. Rohre dieser Art werden für den Entzug von Erdwärme, die Beheizung von Biogasanlagen oder für in Gebäuden verlegte Heizleitungen verwendet. Hier wird ein Innenrohr aus einem vernetzten Polyethylen (PE-X), Polybutylen (PB) oder einem erhöht temperaturbeständigen Polyethylen (PE-RT) verwendet, so dass eine Eignung für Heißwasser als durch das Rohr durchzuleitendes Medium gegeben ist. Das Rohr hat weiterhin eine polymere oder metallische Diffusionssperrschicht und eine äußere Schutzschicht. Diese Schutzschicht kann aus einem hochdichten Polyethylen (HDPE) bestehen, welches gegenüber einem PE mit normaler Dichte eine erhöhte Wärmeleitfähigkeit hat. Es wird nichts über das Molekulargewicht ausgesagt. Die Kennwerte Molekulargewicht und Dichte können bei einem Polyethylen gegenläufig sein, d.h. PE-Typen mit hohem Molekulargewicht weisen oft eine niedrigere Dichte auf als PE-Typen mit geringerem Molekulargewicht. Mangels anderer Angaben ist davon auszugehen, dass es sich hier um Rohre aus einem Standard-HDPE handelt mit in üblichen Bereichen liegendem Molekulargewicht handelt. Für die Schutzschicht werden Schichtdicken von 0,1 bis 1,0 mm, bevorzugt 0,2 mm angegeben. Derartige Schichtdicken liefern keinen Schutzmantel, der bei der Verlegung von Rohren im Außenbereich einer nennenswerten mechanischen Belastung standhält. Bei dem bekannten Rohr dient daher die Schutzschicht nur dazu, das Eindringen von Feuchtigkeit und Sauerstoff ins Innere zu verhindern.

Die Aufgabe der Erfindung besteht darin, ein mindestens zweischichtiges Kunststoffrohr mit den Merkmalen der eingangs genannten Gattung zur Verfügung zu stellen, welches zum einen werkstoffhomogen aufgebaut ist, recycelbar und schweißbar ist und die vorgenannten Nachteile von Kunststoffrohren mit Polypropylen-Schutzmantel vermeidet.

Die Lösung dieser Aufgabe liefert ein Kunststoffrohr der eingangs genannten Gattung mit den kennzeichnenden Merkmalen des Hauptanspruchs.

Erfindungsgemäß ist vorgesehen, dass der Schutzmantel mindestens eine Schicht aus einem geradkettigen unvernetzten Polyethylen umfasst, welches ein höheres mittleres Molekulargewicht aufweist als dasjenige Polyethylen, aus dem das Innenrohr besteht, wobei die Schicht des Schutzmantels ein Polyethylen (PE-HMW) mit einer mittleren molaren Masse von wenigstens etwa 250.000 g/mol, bevorzugt im Bereich von etwa 250.000 g/mol bis etwa 500.000 g/mol umfasst und wobei der Schutzmantel mindestens zweischichtig ausgebildet ist und eine radial innen liegende Schicht aus einem LDPE oder LLDPE umfasst sowie eine Außenschicht aus einem hochmolekularen Polyethylen.

Um ein rationelles Herstellungsverfahren für die erfindungsgemäßen Rohre zu gewährleisten, sollte das Polyethylen der Schutzschicht mit hohem Molekulargewicht bevorzugt noch schneckenextrudierbar sein, woraus sich gegebenenfalls eine Obergrenze für das mittlere Molekulargewicht ergibt.

Weiterhin sollte der Schutzmantel, damit er das Rohr ausreichend gegenüber mechanischen Belastungen schützt, vorzugsweise eine Schichtdicke von wenigstens etwa 0,7 mm haben, besonders bevorzugt eine Schichtdicke im Bereich von etwa 1 mm bis etwa 10 mm, was meist abhängig ist vom Rohrdurchmesser.

Man unterscheidet bei Polyethylenen mit unterschiedlich hohen Molekulargewichten zwischen LD-PE (low density), HD-PE (high density) mit einem Molekulargewicht von etwa 200.000 g/mol bis zu 300.000 g/mol (z.B. PE 300), PE-HMW, welches eine molare Masse von beispielsweise etwa 500.000 g/mol hat (PE 500) und abriebfester ist als PE-HD, und PE-UHMW, beispielsweise PE 1000, welches eine molare Masse von beispielsweise etwa 4.500.000 bis 5.000.000 g/mol hat und eine sehr gute Verschleißfestigkeit, Biegefestigkeit und Schlagzähigkeit aufweist.

Im Rahmen der vorliegenden Erfindung wird unter einem Polyethylen mit höherem Molekulargewicht insbesondere ein nicht modifiziertes homopolymeres lineares Ethylenpolymeres mit einem Molekulargewicht verstanden, welches höher ist als dasjenige eines HD-Polyethylens.

Vorzugsweise weist das Polyethylen des Schutzmantels eine Kerbschlagzähigkeit bei tiefen Temperaturen von größer als 10 kJ/m² (gemessen nach DIN ISO 179, -30°C, gekerbte Proben) auf.

Die vorliegende Erfindung betrifft werkstoffhomogene Schutzmantelrohre, bei denen die Schicht des Schutzmantels ein PE-HMW mit einer molaren Masse von wenigstens etwa 250.000 g/mol, bevorzugt im Bereich von etwa 250.000 g/mol bis etwa 500.000 g/mol, besonders bevorzugt etwa im Bereich von 300.000 g/mol bis etwa 500.000 g/mol umfasst. Polyethylene mit den vorgenannten Molekulargewichten fallen unter die erfindungsgemäße Definition "PE-HMW" (PE mit hohem Molekulargewicht).

Es können auch Polyethylene mit ultrahohem Molekulargewicht (PE-UHMW) für den Schutzmantel verwendet werden, beispielsweise mit einer molaren Masse von mehr als 500.000 g/mol, wobei sich allerdings hier die Einschrän-kung ergibt, dass Polyethylene mit einem extrem hohen Molekulargewicht (PE-UHMW) von mehr als etwa 1.000.000 g/mol bis zu beispielsweise etwa 10.000.000 g/mol) aufgrund der hohen Viskosität nicht mehr Schnecken-extrudierbar sind, wodurch deren Verarbeitung aufwändiger wird.

Die vorliegende Erfindung beschreibt somit ein Schutzmantelrohr mit neuartigem Rohraufbau und verbesserten Schutz-Eigenschaften. Gleichzeitig wird das stoffschlüssige Verbinden derartiger Kunststoffrohre mittels Schweißen, entweder ohne vorheriges Entfernen des Schutzmantels durch Heizelementstumpfschweißen, oder nach dem Entfernen des Schutzmantels durch Heizwendelschweißen mittels Elektroschweißmuffe ermöglicht. So wird durch den besonderen Aufbau des Rohres, mit einem entfernbaren Schutzmantel aus einem gleichen Polymer-Grundwerkstoff Polyethylen wie das Kernrohr, erreicht, dass beide Fügeverfahren genutzt werden können.

Die erfindungsgemäße Lösung bringt erhebliche wirtschaftliche Vorteile bei der Herstellung und Verlegung der Schutzmantelrohre mit sich und hilft auch potentielle Fehlschweißungen minderer Qualität zu vermeiden.

Der Kern der Erfindung stellt eine Rohrkonstruktion dar, die dadurch gekennzeichnet ist, dass werkstoffhomogene (d.h. aus einer Materialspezies wie verschiedenen Polyethylenen bestehende) und peelbare (Schutzmantel kann durch Schälen entfernt werden) Schutzmantelrohre gezielt gefertigt werden. Schutzmantelrohre mit Schichten aus unterschiedlichen Polyolefinen wie beispielsweise Polyethylen und Polypropylen sind hingegen nicht recycelbar und werden als nicht "werkstoffhomogen" im Sinne der vorliegenden Erfindung angesehen. In dem erprobten Ausführungsbeispiel wurden ausschließlich Polyethylene eingesetzt und das übliche Schutzmantelmaterial Polypropylen substituiert. Die im Stand der Technik und unter Punkt 1. beschriebenen Anforderungen wie beispielsweise Schutz des Innenrohres vor Verkratzen, UV-Strahlung etc. und die Möglichkeit den Schutzmantel (wenn gewollt) zu entfernen, bleiben dabei unverändert erhalten. Die erfindungsgemäß für das Innenrohr und den Schutzmantel verwendeten verschiedenen Polyethylensorten weisen unterschiedlich hohe Molekulargewichte (durchschnittliche Kettenlängen der Polyethylenmoleküle)
und Dichten auf.

Die Erfindung ist gekennzeichnet durch folgende Vorteile (V) gegenüber dem Stand der Technik:
Erfindungsgemäß ist ein Schutzmantel aus einem Polyethylen, vorzugsweise mit einem höheren Molekulargewicht und niedrigerem MFI (Melt Flow Index) bzw. MFR (Melt flow rate) als das für das Innenrohr verwendete Polyethylen, vorgesehen. Der Schmelzflußindex oder Melt Flow Index (MFI) dient zur Charakterisierung des Fließverhaltens von Thermoplasten bei bestimmten Druck- und Temperaturbedingungen. Bei den erfindungsgemäßen Schutzmantelrohren ist eine Verlegung auch bei tiefen Temperaturen möglich, da das nachteilige Verspröden des sonst üblichen Polypropylen-Schutzmantels entfällt. Mit anderen Worten: Das neuartige Schutzmantelrohr kann bei gleichen Temperaturen verlegt werden wie jedes Polyethylenrohr ohne Schutzmantel.

Zudem wird ein wirksamer Schutz gegen Abrieb durch die Verwendung eines Polyethylens mit hohem Molekulargewicht erreicht. Ergebnisse (gemäß Normtest) zeigen sogar einen deutlich besseren Schutz gegen Abrasion für die in dieser Erfindungsmeldung beschriebenen Ausführungsbeispiele im Vergleich zu den im Stand der Technik beschriebenen Polypropylen-Schutzmantelrohren.

Gemäß einer bevorzugten Weiterbildung der vorliegenden Erfindung weist das Poylethylen, aus dem der Schutzmantel besteht, einen niedrigeren Melt Flow Index (MFI nach DIN ISO 1133) auf als dasjenige Polyethylen, aus dem das Innenrohr besteht. Ein typischer Wert für den MFI des Kernrohrs liegt beispielsweise bei etwa 9-10 g/10min, gemessen bei 190 °C und 21,6 kg oder 0,3 g/10 min, gemessen bei 190 °C und 5 kg. Der MFI des erfindungsgemäßen Polymeren des Schutzmantels liegt insbesondere bei weniger als 9 g/10 min (190 °C und 21,6 kg) oder weniger als 0,3 kg/10 min (190 °C und 5 kg), bevorzugt liegt der MFI zwischen etwa 1 g/10min und etwa 6 g/10 min beispielsweise bei etwa 2 bis 4 g/10 min, gemessen nach DIN ISO 1133 bei 190 °C und 21,6 kg.

Gemäß einer bevorzugten Weiterbildung der erfindungsgemäßen Aufgabenlösung umfasst das Kunststoffrohr wenigstens eine funktionelle Zwischenschicht zwischen dem Innenrohr und dem Schutzmantel. Diese funktionelle Zwischenschicht kann beispielsweise eine metallische Schicht sein und/oder auf das Innenrohr aufgewickelte Bänder aus einem elektrisch leitenden Material umfassen und/oder die Zwischenschicht kann wenigstens einen Ortungsdraht umfassen oder die Zwischenschicht kann wenigstens eine Diffusionssperrschicht umfassen.

Gemäß einer bevorzugten Weiterbildung der Erfindung kann das Innenrohr zwei- oder mehrschichtig ausgebildet sein. Das erfindungsgemäße Prinzip kann somit übertragen werden auf Schutzmantelrohre, bei denen das Innenrohr aus Polyethylen mehrschichtig ausgeführt ist wie beispielsweise farbige Innen- oder Außenschichten oder funktionelle Innen- und Außenschichten mit verbesserten Abrasions-, chemischen oder Diffusionsbarriere-Eigenschaften.

Weiterhin ist der Schutzmantel mindestens zweischichtig ausgebildet und umfasst eine radial innen liegende Schicht aus einem LDPE oder LLDPE sowie eine Außenschicht aus einem hochmolekularen Polyethylen mit der Spezifikation und den Merkmalen des zuvor beschriebenen Schutzmantels.

Bei einem erfindungsgemäßen Schutzmantelrohr kann auch beispielsweise das In nenrohr aus einem vernetzten Polyethylen bestehen.

Gemäß einer Weiterbildung der Erfindung kann der Schutzmantel eine optisch sichtbare Kennzeichnung als Dehnungsindikator aufweisen, die sich bei Verformung des Kunststoffrohrs durch Dehnung verändert. Insbesondere kann als Dehnungsindikator eine außen am Schutzmantel sichtbare etwa streifenförmige Kennzeichnung dienen, deren Breite sich bei Dehnung des Kunststoffrohrs verändert. Auf diese Weise kann man durch Messen der Streifenbreite des als Dehnungsindikator dienenden Streifens auf dem Schutzmantel auf eine Dehnung des Kunststoffrohrs insgesamt schließen, denn das Rohr ist werkstoffhomogen ausgebildet, was bedeutet, dass sich bei dessen Dehnung der Werkstoff des Innenrohrs (Kernrohrs) ebenso verhält wie der Werkstoff des Schutzmantels. Bei einer Längendehnung des Rohrs wird ein als Kennzeichnung auf dem Schutzmantel angebrachter Streifen schmaler.

Auf Grund des gleichen Dehnverhaltens von Schutzmantel und Innenrohr (gleiche Materialspezies PE) und einer Ausführung der Rohrkonstruktion mit axial auf dem Außenmantel verlaufenden Streifen, welche eine andere Farbe als die des Schutzmantels besitzen, lässt sich somit ein nennenswerter Mehrwert formulieren: Kommt es zu einer Überdehnung des Rohres mit bleibender (plastischer) Verformung wird dies direkt durch eine Abnahme der Streifenbreite optisch erkennbar. Da eine Überdehnung lokal an der schwächsten Stelle des Rohrstranges (z.B. durch Wanddickentoleranzen) auftritt, kann zum einen durch die Abnahme der Streifenbreite eine plastische Verformung und Schädigung optisch erkannt werden und zum anderen auch genau die Stelle innerhalb des Rohrstranges ausgemacht werden.

Das Prinzip des Dehnungsindikators in Form von Axialstreifen kann beispielsweise auch auf eine Ausführung erweitert werden, bei der das Innenrohr mit Streifen versehen ist.

Nach dem oben beschriebenen Prinzip können analog auch Formteile, Rohrbögen, Segmentbögen, T-Stücke oder Bauteile oder Module von Schachtbauten werkstoffhomogen aus Innenrohr und Schutzmantel bestehend aus den genannten Werkstoffen aufgebaut sein und somit miteinander verschweißt und recycelt werden.

Gegenstand der vorliegenden Erfindung ist weiterhin ein Verfahren zur Herstellung eines Kunststoffrohrs der zuvor beschriebenen Art, bei dem ein mindestens zweischichtiger Schutzmantel durch Coextrusion hergestellt wird und dieser Schutzmantel in einem anschließenden Verfahrensschritt auf ein Innenrohr aus Polyethylen aufextrudiert wird.

Das in Anspruch 4 der DE 10 2006 013 008 B4 beschriebene Verfahren beschreibt das Schweißen von Polyethylenrohren mit Polypropylenmantel, ohne dass ein Abmanteln als notwendig angesehen wird. Dies soll erfolgen durch Erwärmen der Enden der Rohrenden zusammen mit dem Schutzmantel auf eine vorgegebene Temperatur und durch anschließendes Zusammenpressen der Rohrenden mit einer vorgegebenen Andruckkraft. Vom Grundsatz her wird das Schweißen von PE-Rohren in den Regelwerken der DVS beschreiben und dort werden auch Parameter wie Anpresskraft, Temperatur und Zeit vorgegeben. Hier wird das Problem des im Stand der Technik beschriebenen Verfahrens deutlich. Die Anpresskraft bzw. der sog. Fügedruck errechnet sich aus dem Querschnitt der zu schweißenden Rohrendenstirnfläche und des zu schweißenden Materials. Für Polyethylen ist nach DVS ein Wert von 0,15 N/mm2 vorgeschrieben, so dass bei einem werkstoffhomogenen Rohr die zum sicheren und regelkonformen Schweißen notwendige Fügekraft oder der Fügedruck durch einfaches multiplizieren dieses Wertes mit der vorliegenden Querschnittsfläche (gesamter Rohraußendurchmesser des Rohres und Gesamtwanddicke der Rohrenden sind hier relevant) berechnet werden kann. Da das im Stand der Technik beschriebene Verfahren jedoch für Rohre aus Polyethylen mit Polypropylen-Schutzmantel gelten soll und für Polypropylen ein 50% niedrigerer Wert von 0,1 N/mm2 vorgeschrieben ist, können keine sicheren und regelkonformen Schweißparameter benannt werden. Bei den erfindungsgemäßen Schutzmantelrohren mit werkstoffhomogenem Rohraufbau entfällt hingegen diese Problematik.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigt:
Figur 1 einen Querschnitt durch ein insgesamt dreischichtiges Schutzmantelrohr gemäß einer Ausführungsvariante der vorliegenden Erfindung;
Figur 2 einen Längsschnitt durch das dreischichtige Schutzmantelrohr von Figur 1 mit zurückgeschnittenem Schutzmantel.

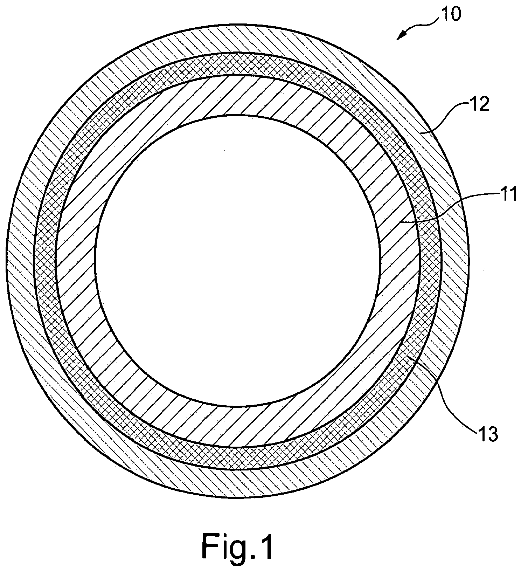

Zunächst wird auf Figur 1 Bezug genommen. In dieser schematischen Darstellung ist ein schematischer Querschnitt durch ein Schutzmantelrohr 10 gemäß einem Ausführungsbeispiel der Erfindung gezeigt. Es handelt sich um ein Schutzmantelrohr 10 mit einem Kernrohr oder Innenrohr 11 aus einem Polyethylen, wobei dies vorzugsweise ein Druckrohrwerkstoff der Klasse PE 100 ist. Das Schutzmantelrohr 10 hat einen additiv aufgebrachten Schutzmantel mit einer radial äußeren Hauptschicht 12, da der Schutzmantel im vorliegenden Ausführungsbeispiel zweischichtig ausgeführt ist. Die äußere Hauptschicht 12 besteht aus einem Polyethylen dessen Molekulargewicht höher ist als das des Innenrohres 11.

Zur Kennzeichnung wird der Schutzmantel beispielsweise außen mit (über den Rohrumfang verteilten) axialen Streifen versehen, die in einer anderen Farbe als der Schutzmantel selbst ausgeführt sind. Die Streifen werden bevorzugt als sogenannte Doppelstreifen oder Dreifachstreifen ausgeführt, wobei das Streifenmaterial (bis auf die Farbe) dem der Mantelhauptschicht 12 entspricht.

Die besten Ergebnisse hinsichtlich des Herstellverfahrens und der Haftung des Schutzmantels auf dem Kernrohr 11 wurden erreicht, wenn der Schutzmantel zweischichtig ausgeführt wird. Dies bedeutet, eine zusätzliche Mittelschicht 13 wird auf das Innenrohr 11 aufgebracht, die sich somit zwischen dem Innenrohr 11 und der radial äußeren Hauptschicht 12 des Schutzmantels befindet. Konkret wurde für diese Mittelschicht 13 ein Polyethylen (LDPE), dessen Dichte geringer ist, als die der für das Innenohr 11 und die Hauptschicht 12 des Schutzmantels verwendeten Polyethylene, eingesetzt. Als vorteilhaft erwies es sich zudem, die LDPE-Schicht aus einer mit Ruß gefüllten LDPE-Type auszuführen, da der Ruß als Trennmittel agiert und die Haftung zwischen der Mantelhauptschicht 12 und der Oberfläche des Innenrohrs 11 abschwächt, so dass die Möglichkeit erhalten bleibt, den Schutzmantel 12, 13 restlos abzumanteln.

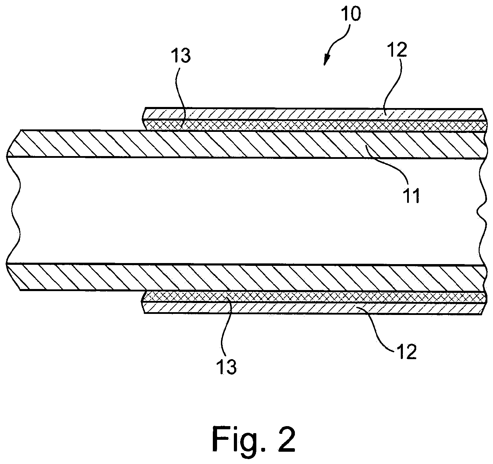

Figur 2 zeigt einen Längsschnitt durch das zuvor unter Bezugnahme auf Figur 1 beschriebene Schutzmantelrohr 10 mit zurückgeschnittenem Schutzmantel, welcher die äußere Hauptschicht 12 und die Mittelschicht 13 aus LDPE umfasst, die auf das Innenrohr 11 aus Polyethylen aufgebracht sind.

Die nachfolgende Grafik zeigt Ergebnisse aus Kerbschlagbiegeversuchen bei verschiedenen Prüftemperaturen. Vereinfacht gesagt spiegelt dieser Versuch wider, wie stark ein Material bei tieferen Temperaturen versprödet (Abplatzen des Schutzmantels bei Schlagbelastung oder starker Biegung). Je höher der erreichte Wert (Balkenhöhe im Diagramm), desto weniger empfindlich reagiert ein Material bei tiefen Temperaturen. Untersucht wurden handelsübliche PP-Typen, welche als Schutzmantelmaterialien eingesetzt werden und im Vergleich dazu ein erfindungsgemäßes Polyethylen, welches für das neuartige Schutzmantelrohr favorisiert wird, nämlich ein Polyethylen PE-HMW. Es wird deutlich, dass mit diesem Polyethylen im Vergleich zu allen untersuchten Polypropylenen und unabhängig von der Prüftemperatur signifikant überlegene Werte erzielt wurden.

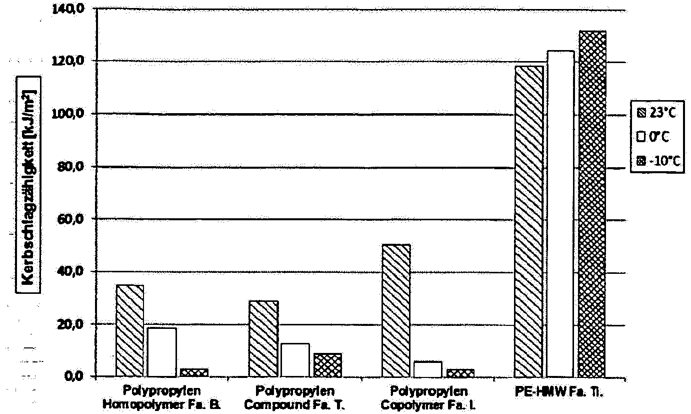

Die Realisierung eines werkstoffhomogenen Rohraufbaues, im Ausführungsbeispiel nur aus Polyethylenen, erlaubt eine biegeweichere und dennoch gegen Abrasion geschützte Schutzmantelrohr-Variante. Hierdurch werden geringe Biegeradien und eine einfachere Verlegung möglich ohne die Schutzwirkung des Schutzmantels gegen Abrasion zu verlieren.

Die nachfolgende Grafik zeigt Ergebnisse aus Abrasionsmessungen an verschiedenen Mantelmaterialien. Verglichen wurden Polypropylen-Typen, die bisher als Schutzmantelmaterial eingesetzt werden und ein für das neuartige Schutzmantelrohr favorisiertes erfindungsgemäßes Polyethylen-Material (PE-HMW). Als Vergleich diente eine Nullprobe (100%). Werte oberhalb von 100% bedeuten einen schlechteren Widerstand gegen Abrasion und Werte unterhalb bedeuten einen besseren Schutz gegen Abrasion. Auch in diesem Test zeigt sich eine deutliche Verbesserung durch den Einsatz des erfindungsgemäßen Schutzmantelmaterials.

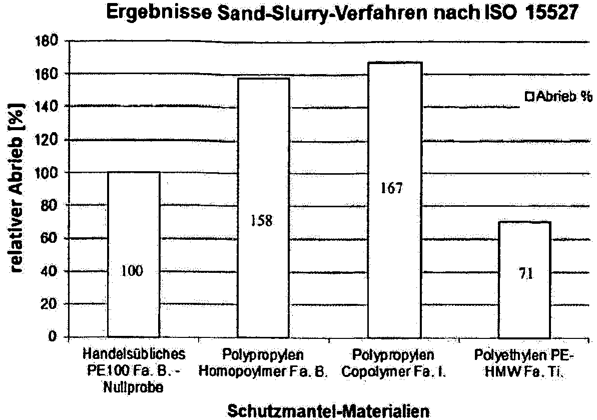

Die Realisierung eines werkstoffhomogenen Rohraufbaues ermöglicht ein einfaches Recycling der Schutzmantelrohre, weil keine Werkstofftrennung (Polypropylen und Polyetyhlen) mehr notwendig wird. Dies hat wirtschaftliche und umweltpolitische Vorteile. Das Konzept des werkstoffhomogenen Rohraufbaues erlaubt das sichere Schweißen ohne die Gefahr der Kontamination durch Fremdmaterial wie Polypropylen und ohne zeitintensives Abmanteln des Schutzmantels. So kann eine stoffschlüssige Verbindung der Rohre abgesichert erfolgen wie sich aus der nachfolgenden Tabelle ergibt.

| Auswertung Schweißfaktor (nach DVS 2203-2) Schutzmantelrohr mit PE-HMW Schutzmantel | | | | | | | |
|---|---|---|---|---|---|---|---|
| | | | | | | | |
| Pos. | Probe | Länge L0 [mm] | min. Dicke [mm] | min. Breite [mm] | Fläche [mm²] | max. Kraft [kN] | Zugfestigkeit [MPa] |
| 1 | Ref 3 | 120 | 12,59 | 30,81 | 387,9 | 8527,4 | 22,0 |
| 2 | Ref 4 | | 12,52 | 30,77 | 385,2 | 8523,6 | 22,1 |
| 3 | Ref 5 | | 12,07 | 29,68 | 358,2 | 7940,5 | 22,2 |
| **MITTELWERT** | | | | | | | **22,1** |
| | | | | | | | |
| 4 | 1 | 120 | 12,19 | 30,98 | 377,6 | 8462,2 | 22,4 |
| 5 | 2 | | 12,12 | 30,76 | 372.8 | 8416,2 | 22,6 |
| 6 | 3 | | 12,21 | 29,25 | 357,1 | 8051,8 | 22,5 |
| **MITTELWERT** | | | | | | | **22,5** |
| | | | | | | | |
| **SCHWEIßFAKTOR** | | | | | | | **1,0** |

In der Tabelle sind Zugversuchsergebnisse an Proben (1-3) aufgelistet, die aus Schutzmantelrohren stammen, welche ohne vorheriges Abmanteln geschweißt wurden. Zum Vergleich sind ebenfalls Proben angeführt, die aus Rohren ohne Schweißung präpariert wurden (Ref. 3-5). Als Maß für eine gute Schweißung wird die Zugfestigkeit gemessen und gefordert, dass der Bruch der Probe außerhalb der Schweißung erfolgt. Anhand der Ergebnisse lässt sich kein negativer Einfluss des Schweißens ohne vorheriges Abmanteln feststellen. Alle Proben erreichen im Rahmen der Streuung gleiche Zugfestigkeitswerte.

Werden Rohraußendurchmesser und Muffeninnendurchmesser aufeinander abgestimmt, ist es grundsätzlich auch möglich, Rohre mit Heizwendelfittings wie Muffen, Übergangsstücken stoffschlüssig zu verschweißen, ohne vorheriges Abmanteln des Schutzmantels.

Das Konzept des werkstoffhomogenen Rohraufbaus erlaubt es bei angeschweißten (ohne vorheriges Abmanteln) Zugköpfen die auftretenden Zugspannungen direkt in die gesamte Querschnittsfläche (Innenohr plus Schutzmantel) der Rohrwand einzuleiten und auftretende Schubkräfte gleichmäßig zu verteilen. Bedingt durch das gleiche Dehnverhalten von Schutzmantel und Innenrohr wird bei einer anliegenden Zugspannung eine über die Rohrwand gleichmäßige Dehnung hervorgerufen. In Summe minimiert sich dadurch die Gefahr eines Mantelaufschubes wie oben beschrieben.

Ein bevorzugtes Merkmal einer Variante des Herstellverfahrens der Schutzmantelrohre 10 besteht (neben der Werkstoffauswahl) darin, dass der vorzugsweise zweischichtig ausgeführte Schutzmantel aus Mittelschicht 13 und äußerer Hauptschicht 12 mittels Co-Extrusion ausgeformt wird und beide Mantelschichten 12, 13 in einem späteren Prozessschritt mittels Auf-Extrusion auf das zuvor extrudierte Innenrohr 11 aufgebracht werden.

Nachfolgend werden noch zusammenfassend die Ergebnisse von MFR (melt flow rate) Messungen wiedergegeben, die an einem beispielhaften erfindungsgemäßen PE-HMW durchgeführt wurden, welches als Schutzmantelmaterial für ein erfindungsgemäßes Rohr gut geeignet war. Die Messungen erfolgten nach der DIN ISO 1133, bei einer Prüftemperatur von 190 °C, einem Gewicht von 21,6 kg (Dichte : 0,765 g/cm³) und Düsenwerten von 8 mm Länge und 2,095 mm Durchmesser. Die scheinbare Schubspannung betrug 193968,00 Pa, die Schergeschwindigkeit 5,20 1/s, die Viskosität 37293 Pas. Es wurden 40 Einzelwerte des MFR in g/10 min gemessen, wobei der Mittelwert aus diesen Messungen 2,1705 +/- 0,0184 g/10 min betrug.

Im Vergleich dazu wurde unter den gleichen Bedingungen ein Standard HD-PE gemessen, wobei sich aus 40 Einzelwerten ein MFR Mittelwert von 9,8495 +/- 0,1969 g/10 min ergab. Die scheinbare Schubspannung betrug 193968,00 Pa, die Schergeschwindigkeit 23,30 l/s und die Viskosität 8325,93 Pas.

### Bezugszeichenliste

- 10: Schutzmantelrohr
- 11: Innenrohr
- 12: äußere Hauptschicht des Schutzmantels
- 13: Mittelschicht

## Patentansprüche

1. Kunststoffrohr umfassend ein Innenrohr (11) aus Polyethylen sowie einen äußeren Schutzmantel aus einem von dem Material des Innenrohrs verschiedenen Polyethylen, **dadurch gekennzeichnet, dass** der Schutzmantel (12) mindestens eine Schicht aus einem geradkettigen unvernetzten Polyethylen umfasst, welches ein höheres mittleres Molekulargewicht aufweist als dasjenige Polyethylen, aus dem das Innenrohr besteht, wobei die Schicht des Schutzmantels (12) ein Polyethylen (PE-HMW) mit einer mittleren molaren Masse von wenigstens etwa 250.000 g/mol, bevorzugt im Bereich von etwa 250.000 g/mol bis etwa 500.000 g/mol umfasst und wobei der Schutzmantel mindestens zweischichtig ausgebildet ist und eine radial innen liegende Schicht (13) aus einem LDPE oder LLDPE umfasst sowie eine Außenschicht (12) aus einem hochmolekularen Polyethylen.

2. Kunststoffrohr nach Anspruch 1, **dadurch gekennzeichnet, dass** das Polyethylen des Schutzmantels eine Kerbschlagzähigkeit bei tiefen Temperaturen von größer als 10 kJ/m² (gemessen nach DIN ISO 179, -30°C, gekerbte Proben) aufweist.

3. Kunststoffrohr nach Anspruch 1, **dadurch gekennzeichnet, dass** die Schicht des Schutzmantels (12) ein PE-HMW oder ein PE-UHMW mit einer molaren Masse von mehr als 300.000 g/mol umfasst.

4. Kunststoffrohr nach einem der Ansprüche 1 bis 3, **dadurch gekennzeichnet, dass** das Polyethylen, aus dem mindestens eine Schicht des Schutzmantels (12) besteht, einen Melt Flow Index (MFI) kleiner 0,3 g/10 min (190°C, 5 kg) aufweist, wobei dieser Melt Flow Index (MFI) kleiner ist als derjenige des Polyethylens, aus dem das Innenrohr (11) besteht.

5. Kunststoffrohr nach einem der Ansprüche 1 bis 4, **dadurch gekennzeichnet, dass** das Innenrohr zwei- oder mehrschichtig ausgebildet ist.

6. Kunststoffrohr nach einem der Ansprüche 1 bis 5, **dadurch gekennzeichnet, dass** der Schutzmantel (12) eine optisch sichtbare Kennzeichnung als Dehnungsindikator aufweist, die sich bei Verformung des Kunststoffrohrs durch Dehnung verändert.

7. Kunststoffrohr nach Anspruch 6, **dadurch gekennzeichnet, dass** als Dehnungsindikator eine außen am Schutzmantel (12) sichtbare etwa streifenförmige Kennzeichnung dient, deren Breite sich bei Dehnung des Kunststoffrohrs verändert.

8. Verfahren zur Herstellung eines Kunststoffrohrs nach einem der Ansprüche 1 bis 7, **dadurch gekennzeichnet, dass** ein mindestens zweischichtiger Schutzmantel (12, 13) durch Coextrusion hergestellt wird und dieser Schutzmantel in einem nachfolgenden Verfahrensschritt auf ein zuvor extrudiertes Innenrohr (11) aus Polyethylen aufextrudiert wird.

## Claims

1. Plastic pipe comprising an inner tube (11) made of polyethylene and an outer protective sleeve made of a polyethylene that is different from the material of the inner tube, **characterized in that** the protective sleeve (12) comprises at least one layer of a straight chain, non-crosslinked polyethylene that has a greater average molecular weight than that of the polyethylene from which the inner tube is made, wherein the layer of the protective sleeve (12) comprises a polyethylene (PE-HMW) with an average molar mass of at least approximately 250,000 g/mol, preferably in the range from about 250,000 g/mol to about 500,000 g/mol, and wherein the protective sleeve is constructed with at least two layers, comprising a radially inner layer (13) made from a LDPE or LLDPE, and an outer layer (12) made from an high-molecular weight polyethylene.

2. Plastic pipe according to Claim 1, **characterized in that** the polyethylene of the protective sleeve has a notch toughness at low temperatures greater than 10 kJ/m² (measured in accordance with DIN ISO 179, - 30 °C, notched samples).

3. Plastic pipe according to Claim 1, **characterized in that** the layer of the protective sleeve (12) comprises a PE-HMW or a PE-UHMW with a molar mass greater than 300,000 g/mol.

4. Plastic pipe according to any one of Claim 1 to 3, **characterized in that** the polyethylene from which at least one layer of the protective sleeve (12) is made has a melt flow index (MFI) lower than 0.3 g/10 min (190°C, 5 kg), wherein said melt flow index (MFI) is lower than that of polyethylene from which the inner tube (11) is made.

5. Plastic pipe according to any one of Claims 1 to 4, **characterized in that** the inner tube is constructed with two or more layers.

6. Plastic pipe according to any one of Claims 1 to 5, **characterized in that** the protective sleeve (12) has a visibly discernible marking as an expansion indicator, which changes by expansion when the plastic pipe undergoes deformation.

7. Plastic pipe according to Claim 6, **characterized in that** a strip-like marking that is visible on the outside of the protective sleeve (12) and of which the width changes when the plastic pipe expands, serves as the expansion indicator.

8. Method for producing a plastic pipe according to any one of Claims 1 to 7, **characterized in that** a protective sleeve (12, 13) comprising at least two layers is produced by coextrusion, and said protective sleeve is extruded onto a previously extruded inner tube (11) made from polyethylene in a subsequent process step.

## Revendications

1. Tube en matière plastique, comprenant un tube interne (11) en polyéthylène, ainsi qu'une enveloppe protectrice externe en un polyéthylène différent de la matière du tube interne, **caractérisé en ce que** l'enveloppe protectrice (12) comprend au moins une couche en polyéthylène linéaire non réticulé, laquelle fait preuve d'un poids moléculaire moyen supérieur à celui du polyéthylène, dans lequel est constitué le tube interne, la couche de l'enveloppe protectrice (12) comprenant un polyéthylène (PE-HMW) d'une masse moléculaire moyenne d'au moins environ 250.000 g/mole, de préférence dans l'ordre d'environ 250.000 g/mole jusqu'à environ 500.000 g/mole et l'enveloppe protectrice étant conçue au moins en version bicouche et comprenant une couche (13) située à l'intérieur en direction radiale en un LDPE ou un LLDPE, ainsi qu'une couche externe (12) en un polyéthylène à poids moléculaire élevé.

2. Tube en matière plastique selon la revendication 1, **caractérisé en ce que** le polyéthylène de l'enveloppe protectrice fait preuve d'un indice de résilience à basses températures qui est supérieur à 10 kJ/m² (mesuré selon la norme DIN ISO 179, -30 °C, éprouvettes entaillées).

3. Tube en matière plastique selon la revendication 1, **caractérisé en ce que** la couche de l'enveloppe protectrice (12) comprend un PE-HMW ou un PE-UHMW, d'une masse moléculaire supérieure à 300.000 g/mole.

4. Tube en matière plastique selon l'une quelconque des revendications 1 à 3, **caractérisé en ce que** le polyéthylène est constitué de l'au moins une couche de l'enveloppe protectrice (12), fait preuve d'un indice de fluidité à chaud (MFI) inférieur à 0,3 g/10 minutes (190 °C, 5 kg), ledit indice de fluidité à chaud (MFI) étant inférieur à celui du polyéthylène, dans lequel est constitué le tube interne (11).

5. Tube en matière plastique selon l'une quelconque des revendications 1 à 4, **caractérisé en ce que** le tube interne est conçu en version bicouches ou multicouches.

6. Tube en matière plastique selon l'une quelconque des revendications 1 à 5, **caractérisé en ce que** l'enveloppe protectrice (12) comporte un marquage optiquement visible en tant qu'indicateur d'extension, qui varie lors de la déformation par extension du tube en matière plastique.

7. Tube en matière plastique selon la revendication 6, **caractérisé en ce qu'**un marquage approximativement en forme de bande, visible de l'extérieur sur l'enveloppe protectrice (12) dont la largeur varie lors de l'extension du tube en matière plastique fait office d'indicateur d'extension.

8. Procédé, destiné à fabriquer un tube en matière plastique selon l'une quelconque des revendications 1 à 7, **caractérisé en ce que** l'on fabrique par coextrusion une enveloppe protectrice (12, 13) au moins bicouches et que dans une étape suivant du procédé suivante, l'on extrude l'enveloppe protectrice sur un tube interne (11) en polyéthylène précédemment extrudé.
